# EUROPEAN PATENT SPECIFICATION

(11) **EP 2 636 876 B1**
(45) Date of publication and mention of the grant of the patent: **06.12.2017**
(21) Application number: 11837976.7
(22) Date of filing: 31.10.2011
(51) Int. Cl.: F02D 29/06, F02B 37/00, F02B 37/007, F02B 41/10, F02D 9/04, F02D 13/02, F02D 23/02, F01N 5/04

(54) **APPARATUS FOR RECOVERING ENGINE EXHAUST GAS ENERGY**
VORRICHTUNG ZUR RÜCKGEWINNUNG DER ENERGIE AUS EINEM MOTORABGAS
ÉQUIPEMENT POUR RÉCUPÉRER L'ÉNERGIE DES GAZ D'ÉCHAPPEMENT D'UN MOTEUR

(30) Priority: 05.11.2010 JP 2010248521
(43) Date of publication of application: 11.09.2013
(73) Proprietor: Mitsubishi Heavy Industries, Ltd., Tokyo 108-8215 (JP); Japan Engine Corporation, Futami-Cho Akashi-City Hyogo 674-0093 (JP)
(72) Inventor: MURATA, Satoru, Tokyo 108-8215 (JP); HIGUCHI, Jun, Tokyo 108-8215 (JP)
(74) Representative: Hoffmann Eitle
(86) International application number: PCT/JP2011/075069
(87) International publication number: WO 2012/060326

(56) References cited:
- EP-A1- 2 410 151
- WO-A1-2008/135059
- JP-A- 63 045 409
- JP-A- 63 045 409
- JP-A- 2004 156 528
- JP-A- 2004 156 528
- JP-A- 2009 137 383
- JP-A- 2009 257 098
- JP-A- 2010 138 875
- JP-A- 2010 138 875

## Description

### {Technical Field}

The present invention relates to an engine-exhaust-energy recovery device that recovers exhaust energy of exhaust gas (combustion gas) discharged from an engine body of a marine diesel engine (main engine) to use the exhaust energy as motive power.

### {Background Art}

A known exhaust-energy recovery device that recovers exhaust energy contained in exhaust gas (combustion gas) to use the recovered energy as motive power is disclosed in, for example, PTL 1.

In addition, EP 2 410 151 A discloses an exhaust gas energy recovery device by which the optimal engine operating condition can be continuously maintained in a manner that the flow rate of the engine exhaust gas fed to the power turbine is regulated so that the scavenging air pressure becomes optimal in order that the engine performance (the fuel cunsumption rate) corresponding to the engine load and the engine speed becomes optimal. The engine exhaust gas energy recovery device provided the engine load detecting sensor, the engine speed detecting sensor and the scavenging air pressure detecting sensor, the device regulating the flow rate of the exhaust gas streaming into the exhaust gas turbocharger via controlling the flow rate of the exhaust gas streaming into the power turbine of the exhaust gas energy recovery device, so that the scavenging air pressure is maintained at an arbitrarily ordered level and the engine is operated under a condition that the fuel consumption rate is minimal.

### {Citation List}

### {Patent Literature}

{PTL 1} Japanese Unexamined Patent Application, Publication No. 2009-257097

### {Summary of Invention}

### {Technical Problem}

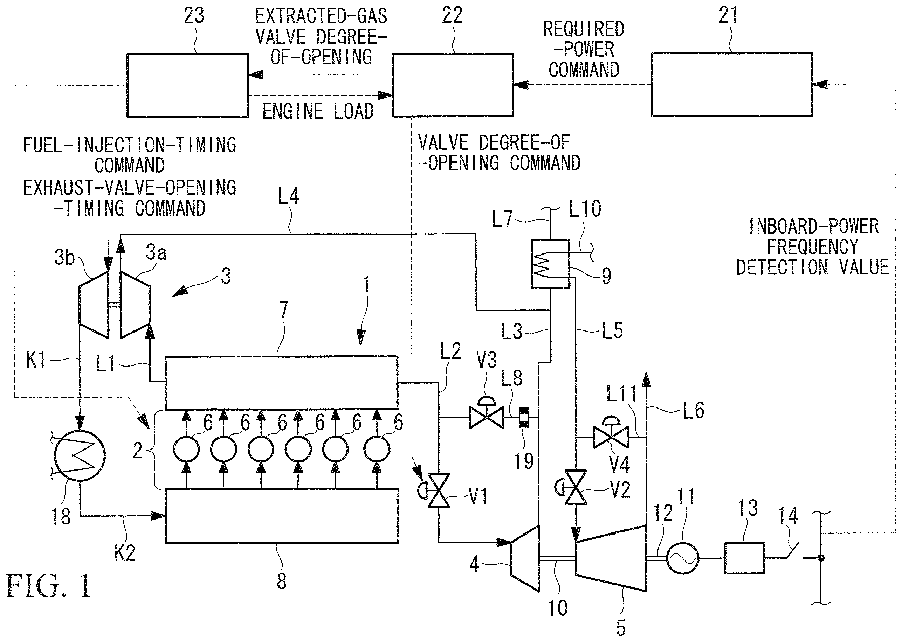

However, in the exhaust-energy recovery device disclosed in FIG. 1 of PTL 1, priority is given to ensure the amount of and pressure of scavenging air supplied to an engine body 2, more specifically, to a supply manifold 8, from the standpoint of ensuring the performance and reliability of the engine body 2. Accordingly, in the exhaust-energy recovery device disclosed in FIG. 1 of PTL 1, the flow rate of exhaust gas (the amount of extracted gas) guided, through a third valve (gas-inlet control valve), to a turbine portion 5a of a power turbine 5 that drives a generator 5b is inevitably limited. Hence, if the amount of power generated by the generator 5b is smaller than the amount of power needed in a ship, a diesel engine (auxiliary engine) that rotationally drives a generator different from the generator 5b and having fuel efficiency inferior to that of a marine diesel engine (main engine) has to be activated to meet the inboard power demand, which results in a problem in that the total running cost increases.

The present invention has been made in view of the above-described circumstances, and an object thereof is to provide an engine-exhaust-energy recovery device that can meet the inboard power demand without activating, as far as possible, a diesel engine (auxiliary engine) having fuel efficiency inferior to that of a marine diesel engine (main engine), thereby reducing the total running cost.

### {Solution to Problem}

To overcome the above-described problems, the present invention employs the following solutions.

An engine-exhaust-energy recovery device according to the present invention is defined by the combination of features of claim 1. Dependent claims relate to preferred embodiments.

An engine-exhaust-energy recovery device according to the present invention includes a power turbine driven by exhaust gas guided from an engine body of a marine diesel engine; a gas-inlet control valve provided at an intermediate point in an exhaust pipe that guides the exhaust gas from the engine body to the power turbine; a generator driven by the power turbine; and a control unit that adjusts the degree-of-opening of the gas-inlet control valve according to the difference between the amount of power generated by the generator and the amount of power needed in a ship. When the degree-of-opening of the gas-inlet control valve reaches a predetermined threshold and the amount of power generated by the generator is smaller than the amount of power needed in the ship, a control command to delay fuel-injection timing and/or a control command to advance exhaust-valve opening timing are output from the control unit to the engine body according to the difference between the amount of power generated by the generator and the amount of power needed in the ship.

Preferably, the engine-exhaust-energy recovery device includes a hybrid
exhaust-gas turbocharger including a turbine portion driven by exhaust gas guided from an engine body of a marine diesel engine, a compressor portion driven by the turbine portion to feed pressurized outside air to the engine body, and a generator having a rotation shaft connected to a rotation shaft of the turbine portion and the compressor portion, and a control unit that adjusts the amount of power generated by the generator according to the difference between the amount of power generated by the generator and the amount of power needed in a ship. When the amount of power generated by the generator reaches a predetermined threshold and the amount of power generated by the generator is smaller than the amount of power needed in the ship, a control command to delay fuel-injection timing and/or a control command to advance exhaust-valve opening timing are output from the control unit to the engine body according to the difference between the amount of power generated by the generator and the amount of power needed in the ship.

The present invention further encompasses a ship according to claim 3. Moreover, a method according to the present invention is defined by the combination of features of claim 4. Dependent claims relate to preferred embodiments.

In a method of operating an engine-exhaust-energy recovery device according to the present invention, the engine-exhaust-energy recovery device including a power turbine driven by exhaust gas guided from an engine body of a marine diesel engine, a gas-inlet control valve provided at an intermediate point in an exhaust pipe that guides the exhaust gas from the engine body to the power turbine, and a generator driven by the power turbine, the degree-of-opening of the gas-inlet control valve is adjusted according to the difference between the amount of power generated by the generator and the amount of power needed in a ship. When the degree-of-opening of the gas-inlet control valve reaches a predetermined threshold and the amount of power generated by the generator is smaller than the amount of power needed in the ship, the injection timing of a fuel-injection valve attached to the engine body is delayed and/or the timing of opening an exhaust valve attached to the engine body is advanced according to the difference between the amount of power generated by the generator and the amount of power needed in the ship.

Preferably, the method comprises operating an engine-exhaust-energy recovery device including a hybrid exhaust-gas turbocharger having a turbine portion driven by exhaust gas guided from an engine body of a marine diesel engine, a compressor portion driven by the turbine portion to feed pressurized outside air to the engine body, and a generator having a rotation shaft connected to a rotation shaft of the turbine portion and the compressor portion, wherein the amount of power generated by the generator is
adjusted according to the difference between the amount of power generated by the generator and the amount of power needed in a ship. When the amount of power generated by the generator reaches a predetermined threshold and the amount of power generated by the generator is smaller than the amount of power needed in the ship, the injection timing of a fuel-injection valve attached to the engine body is delayed and/or the timing of opening an exhaust valve attached to the engine body is advanced according to the difference between the amount of power generated by the generator and the amount of power needed in the ship.

With the above-described engine-exhaust-energy recovery device and method of operating an engine-exhaust-energy recovery device, by delaying the fuel-injection timing or advancing the exhaust-valve opening timing, or by delaying the fuel-injection timing and advancing the exhaust-valve opening timing, the temperature of the exhaust gas to be fed to the power turbine or the hybrid exhaust-gas turbocharger is increased, and the energy recovery rate in the power turbine or the hybrid exhaust-gas turbocharger is increased. Accordingly, it is possible to meet the inboard power demand without activating a diesel engine (auxiliary engine) having fuel efficiency inferior to that of a marine diesel engine (main engine), thereby reducing the total running cost.

Preferably, the engine-exhaust-energy recovery device includes a power turbine driven by exhaust gas guided from an engine body of a marine diesel engine; a gas-inlet control valve provided at an intermediate point in an exhaust pipe that guides the exhaust gas from the engine body to the power turbine; a generator driven by the power turbine; and a control unit that adjusts the degree-of-opening of the gas-inlet control valve according to the difference between the amount of power generated by the generator and the amount of power needed in a ship. When the degree-of-opening of the gas-inlet control valve reaches a predetermined threshold and the amount of power generated by the generator is assumed to be smaller than the amount of power needed in the ship, a control command to delay fuel-injection timing and/or a control command to advance exhaust-valve opening timing are output from the control unit to the engine body in advance according to the difference between the amount of power generated by the generator and the amount of power needed in the ship.

Preferably, the engine-exhaust-energy recovery device includes a hybrid exhaust-gas turbocharger including a turbine portion driven by exhaust gas guided from an engine body of a marine diesel
engine, a compressor portion driven by the turbine portion to feed pressurized outside air to the engine body, and a generator having a rotation shaft connected to a rotation shaft of the turbine portion and the compressor portion, and a control unit that adjusts the amount of power generated by the generator according to the difference between the amount of power generated by the generator and the amount of power needed in a ship. When the amount of power generated by the generator reaches a predetermined threshold and the amount of power generated by the generator is assumed to be smaller than the amount of power needed in the ship, a control command to delay fuel-injection timing and/or a control command to advance exhaust-valve opening timing are output from the control unit to the engine body in advance according to the difference between the amount of power generated by the generator and the amount of power needed in the ship.

Preferably, the method comprises operating an engine-exhaust-energy recovery device including a power turbine driven by exhaust gas guided from an engine body of a marine diesel engine, a gas-inlet control valve provided at an intermediate point in an exhaust pipe that guides the exhaust gas from the engine body to the power turbine, and a generator driven by the power turbine, wherein the
degree-of-opening of the gas-inlet control valve is adjusted according to the difference between the amount of power generated by the generator and the amount of power needed in a ship. When the degree-of-opening of the gas-inlet control valve reaches a predetermined threshold and the amount of power generated by the generator is assumed to be smaller than the amount of power needed in the ship, the injection timing of a fuel-injection valve attached to the engine body is delayed in advance and/or the timing of opening an exhaust valve attached to the engine body is advanced in advance according to the difference between the amount of power generated by the generator and the amount of power needed in the ship.

Preferably, the method comprises operating an engine-exhaust-energy recovery device including a hybrid exhaust-gas turbocharger having a turbine portion driven by exhaust gas guided from an engine body of a marine diesel engine, a compressor portion driven by the turbine portion to feed pressurized outside air to the engine body, and a generator having a rotation shaft connected to a rotation shaft of the turbine portion and the compressor portion, wherein the amount of power generated by the generator is adjusted according to the difference between the amount of
power generated by the generator and the amount of power needed in a ship. When the amount of power generated by the generator reaches a predetermined threshold and the amount of power generated by the generator is assumed to be smaller than the amount of power needed in the ship, the injection timing of a fuel-injection valve attached to the engine body is delayed in advance and/or the timing of opening an exhaust valve attached to the engine body is advanced in advance according to the difference between the amount of power generated by the generator and the amount of power needed in the ship.

With the above-described engine-exhaust-energy recovery device and method of operating an engine-exhaust-energy recovery device, by delaying the fuel-injection timing or advancing the exhaust-valve opening timing, or by delaying the fuel-injection timing and advancing the exhaust-valve opening timing, the temperature of the exhaust gas to be fed to the power turbine or the hybrid exhaust-gas turbocharger is increased, and the energy recovery rate in the power turbine or the hybrid exhaust-gas turbocharger is increased. Accordingly, it is possible to meet the inboard power demand without activating a diesel engine (auxiliary engine) having fuel efficiency inferior to that of a marine diesel engine (main engine), thereby reducing the total running cost.

Furthermore, when it is assumed that the amount of power generated by the generator is smaller than the amount of power needed in the ship, a so-called feedforward control is performed by delaying the fuel-injection timing in advance or advancing the exhaust-valve opening timing in advance, or by delaying the fuel-injection timing in advance and advancing the exhaust-valve opening timing in advance. Accordingly, the difference between the amount of power generated by the generator and the amount of power needed in the ship can be kept constantly small, and stable inboard power supply can be achieved.

A ship according to a ninth aspect of the present invention includes any one of the above-described engine-exhaust-energy recovery devices.

With the ship according to the ninth aspect of the present invention, it is possible to meet the inboard power demand without activating a diesel engine (auxiliary engine) having fuel efficiency inferior to that of a marine diesel engine (main engine), thereby reducing the total running cost.

### {Advantageous Effects of Invention}

The engine-exhaust-energy recovery device of the present invention is advantageous in that it is possible to meet the inboard power demand without activating, as far as possible, a diesel engine (auxiliary engine) having fuel efficiency inferior to that of a marine diesel engine (main engine), thereby reducing the total running cost.

### {Brief Description of Drawings}

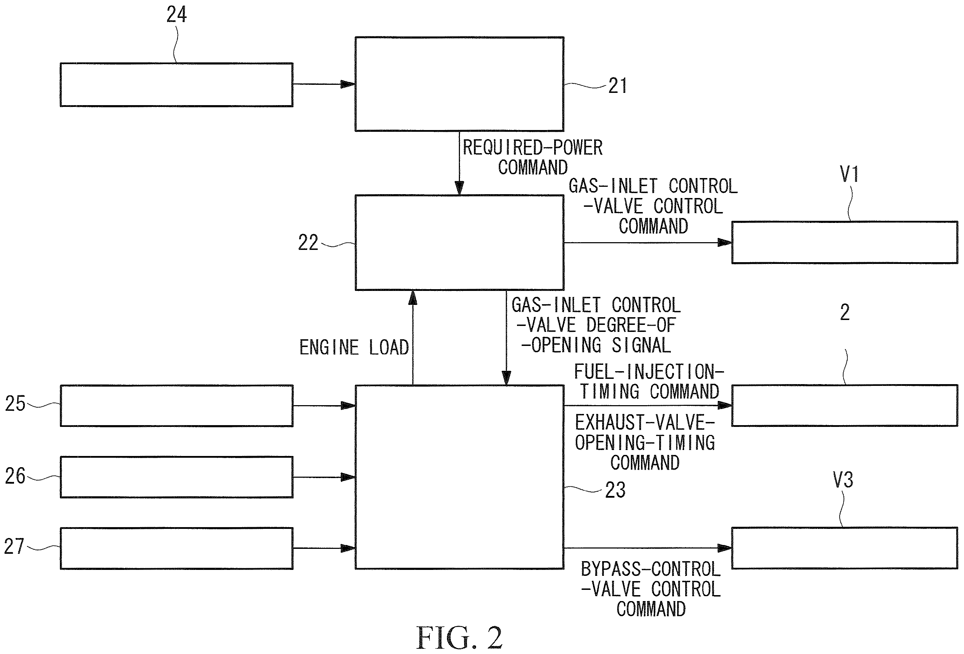

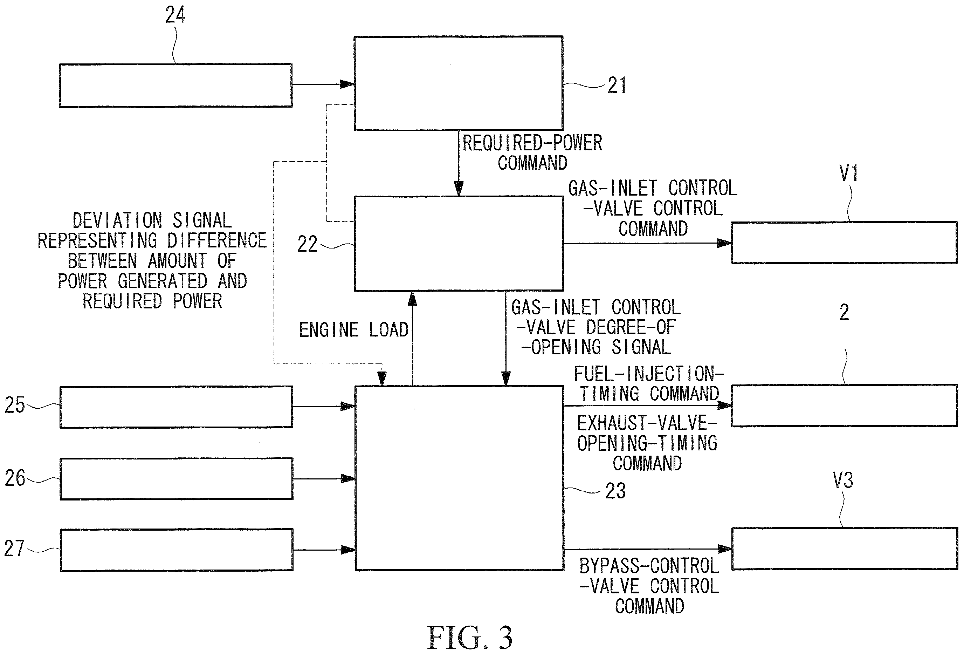

{FIG. 1} FIG. 1 is a schematic block diagram of an engine-exhaust-energy recovery device according to a first embodiment of the present invention.
{FIG. 2} FIG. 2 is a block diagram for describing, in more detail, the relevant part in FIG. 1.
{FIG. 3} FIG. 3 is a block diagram for describing, in more detail, the relevant part of an engine-exhaust-energy recovery device according to a second embodiment of the present invention.

### {Description of Embodiments}

### First Embodiment

Referring to FIGS. 1 and 2, an engine-exhaust-energy recovery device according to a first embodiment of the present invention will be described below. FIG. 1 is a schematic block diagram of an engine-exhaust-energy recovery device according to a first embodiment of the present invention. FIG. 2 is a block diagram for describing, in more detail, the relevant part in FIG. 1.

Note that, the dimensions, materials, shapes, relative locations, etc. of components described in this embodiment are just examples, and it is not intended to limit the scope of the present invention only to those mentioned, unless otherwise specifically stated so.

As shown in FIG. 1, a marine diesel engine (main engine) 1 includes a diesel engine body (for example, a low-speed two-cycle diesel engine) 2, an exhaust manifold 7 of the diesel engine body 2 (hereinbelow, "engine body"), and cylinders 6 in which fuel injected by a fuel-injection device (not shown) into the engine body 2 burns (in this embodiment, a six-cylinder engine that has six inline cylinders is illustrated). Reference numeral 3 denotes an exhaust turbocharger that includes an exhaust turbine portion 3a which is driven by exhaust gas discharged from the exhaust manifold 7 and a compressor portion 3b which is coaxially coupled to the exhaust turbine portion 3a and is rotationally driven to supply pressurized outside air, serving as scavenging air (supplied air), to the engine body 2. Reference numeral L1 denotes a first exhaust pipe connecting the exhaust manifold 7 and the exhaust turbine portion 3a, through which the exhaust gas is guided to the exhaust turbine portion 3a. Reference numeral 18 denotes an intercooler that cools the scavenging air (supplied air), i.e., the outside air compressed by the compressor portion 3b, to increase the air density. Reference numeral K1 denotes a first air-supply pipe connecting the compressor portion 3b and the intercooler 18, and Reference numeral K2 denotes a second air-supply pipe connecting the intercooler 18 and a supply manifold 8 of the engine body 2, through which the scavenging air (supplied air) cooled in the intercooler 18 is guided to the supply manifold 8 of the engine body 2.

Reference numeral 4 denotes a power turbine that is driven by exhaust gas diverted from the exhaust manifold 7 and serves as a driving source of a generator (described below). Reference numeral 9 denotes a heat exchanger that causes water to be transformed into steam by heat exchange using the heat of the exhaust gas that has driven the power turbine 4 and the exhaust turbine portion 3a of the exhaust turbocharger 3. Reference numeral L10 denotes a water supply pipe through which water is supplied to the heat exchanger 9. The heat exchanger 9 allows water supplied through the water supply pipe L10 to flow through a steam generating pipe (not shown) to cause the water to be transformed into steam by heat exchange using the heat of the exhaust gas.

Reference numeral L2 denotes a second exhaust pipe connecting the exhaust manifold 7 and the power turbine 4, through which the exhaust gas is guided to the power turbine 4. Reference numeral L3 denotes a third exhaust pipe connecting the power turbine 4 and the heat exchanger 9, through which the exhaust gas discharged from the power turbine 4 is guided to the heat exchanger 9. Reference numeral L4 denotes a fourth exhaust pipe connecting the exhaust turbine portion 3a of the exhaust turbocharger 3 and the third exhaust pipe L3, through which the exhaust gas from the exhaust turbine portion 3a is guided to the heat exchanger 9. Reference numeral L5 denotes a fifth exhaust pipe connecting the heat exchanger 9 and the steam turbine 5 that serves as the driving source of the generator in cooperation with the power turbine 4, through which the steam generated by heat exchange in the heat exchanger 9 is guided to the steam turbine 5. Reference numeral L6 denotes a sixth exhaust pipe through which the steam that has been used to drive the steam turbine 5 is returned to a condenser (steam condenser) (not shown). Reference numeral L7 denotes a seventh exhaust pipe through which the exhaust gas that has transformed water into steam by heat exchange in the heat exchanger 9 is discharged outside the ship through a funnel (chimney) (not shown).

Note that condensed water obtained by condensing steam in the condenser (steam condenser) is supplied to the heat exchanger 9 through the water supply pipe L10.

Reference numeral V1 denotes a gas-inlet control valve that is provided at an intermediate point in the second exhaust pipe L2 and whose degree-of-opening is adjusted by a controller (not shown) so that the flow rate of the exhaust gas flowing into the power turbine 4 is controlled. Reference numeral V2 denotes a steam-flow-rate adjusting valve that is provided at an intermediate point in the fifth exhaust pipe L5 and whose degree-of-opening is adjusted by the aforementioned controller so that the flow rate of the steam flowing into the steam turbine 5 is controlled. Reference numeral V3 denotes an exhaust-gas bypass control valve that is provided at an intermediate point in a first bypass pipe L8 connecting the second exhaust pipe L2, at a portion on the upstream side of the gas-inlet control valve V1, and the third exhaust pipe L3. Reference numeral V4 denotes a steam bypass flow-rate control valve that is provided at an intermediate point in a second bypass pipe L11 connecting the fifth exhaust pipe L5, at a portion on the upstream side of the flow-rate adjusting valve V2, and the sixth exhaust pipe L6.

Furthermore, an orifice 19 is provided at an intermediate point between the exhaust-gas bypass control valve V3 and the third exhaust pipe L3. The orifice 19 is adjusted to allow exhaust gas of an equal amount to the amount of exhaust gas flowing through the gas-inlet control valve V1 when the engine body 2 is operating at a high load (regular navigational operation) and the power turbine 4 is operating at full load (i.e., when the exhaust-gas bypass control valve V3 is fully closed and the gas-inlet control valve V1 is fully open) to flow through the exhaust-gas bypass control valve V3 when the gas-inlet control valve V1 is fully closed (i.e., the power turbine 4 is stopped).

Accordingly, an increase in flow rate of the exhaust gas supplied to the exhaust turbocharger 3 side occurring when the power turbine 4 is stopped while the engine body 2 is operating at a high load and a resulting increase in scavenging pressure beyond a predetermined value are prevented, preventing an adverse influence on the engine.

On the other hand, the orifice 19, which is adjusted to allow exhaust gas of an equal amount to the amount of exhaust gas flowing through the power turbine 4 when the engine body 2 is operating at a high load (regular navigational operation) and the power turbine 4 is operating at full load to flow therethrough (when the gas-inlet control valve V1 is fully closed), as described above, does not allow the exhaust gas to flow therethrough to such an extent that the flow rate of the exhaust gas supplied to the exhaust turbocharger 3 side decreases when the gas-inlet control valve V1 is fully closed. Thus, a decrease in scavenging pressure of the exhaust turbocharger 3 below a predetermined value is also prevented, and optimal operation of the engine body 2 can be ensured.

The rotation shaft (not shown) of the power turbine 4 and the rotation shaft (not shown) of the steam turbine 5 are coupled via a reducer (not shown) and a coupling 10, and the rotation shaft (not shown) of the steam turbine 5 and the rotation shaft (not shown) of the generator 11 are coupled via a reducer (not shown) and a coupling 12.

Furthermore, the generator 11 is electrically connected to a distribution board 14 that is installed separately in the ship (in this embodiment, in an engine room) via a controlling resistor 13, thereby allowing power generated by the generator 11 to be used as an inboard power source.

As shown in FIGS. 1 and 2, the engine-exhaust-energy recovery device according to this embodiment includes, in addition to the above-mentioned components, a power management system 21, a power-turbine control system (power-turbine controller: control unit: control device) 22, and an engine control system (engine controller: control unit: control device) 23.

The inboard-power frequency detection value (data) detected by an inboard-power frequency detecting portion 24 (see FIG. 2) that detects the frequency of power supplied to the ship is input to the power management system 21 every predetermined period of time (periodically). The power management system 21 outputs a required-power command (control signal) to the power-turbine control system 22 according to the input inboard-power frequency detection value.

The required-power command output from the power management system 21 and the engine load (described below) output from the engine control system 23 are input to the power-turbine control system 22 every predetermined period of time (periodically), and the power-turbine control system 22 outputs a gas-inlet control-valve control command (valve degree-of-opening command) to the gas-inlet control valve V1 and outputs a gas-inlet control-valve degree-of-opening signal (extracted-gas valve degree-of-opening) to the engine control system 23.

The gas-inlet control-valve control command output from the power-turbine control system 22 is input to the gas-inlet control valve V1 every predetermined period of time (periodically), and the degree-of-opening of the gas-inlet control valve V1 is automatically adjusted according to the gas-inlet control-valve control command input thereto.

More specifically, when the inboard power demand increases, and the frequency of power supplied to the ship becomes smaller than a (first) predetermined value F1, the power management system 21 transmits a signal (command) to the effect that the inboard power demand is increasing (the inboard power supply is insufficient) to the power-turbine control system 22, and the power-turbine control system 22 transmits a signal (command) to the gas-inlet control valve V1 to increase the degree-of-opening. When the degree-of-opening of the gas-inlet control valve V1 is increased to increase the flow rate of the exhaust gas flowing into the power turbine 4, and the frequency of power supplied to the ship becomes larger than or equal to the (first) predetermined value F1 or a (second) predetermined value F2 that is larger than the predetermined value F1, the increasing of the degree-of-opening of the gas-inlet control valve V1 is stopped, and the adjustment of the degree-of-opening of the gas-inlet control valve V1 is temporarily terminated.

In contrast, when the inboard power demand decreases, and the frequency of power supplied to the ship exceeds a (third) predetermined value F3 that is larger than the predetermined values F1 and F2, the power management system 21 transmits a signal (command) to the power-turbine control system 22 to the effect that the inboard power demand is decreasing (the inboard power supply is excessive), and the power-turbine control system 22 transmits a signal (command) to the gas-inlet control valve V1 to decrease the degree-of-opening. When the degree-of-opening of the gas-inlet control valve V1 is decreased to reduce the flow rate of the exhaust gas flowing into the power turbine 4, and the frequency of power supplied to the ship becomes smaller than or equal to the (third) predetermined value F3 or a (fourth) predetermined value F4 that is smaller than the predetermined value F3 and larger than the predetermined value F2, the decreasing of the degree-of-opening of the gas-inlet control valve V1 is stopped, and the adjustment of the degree-of-opening of the gas-inlet control valve V1 is temporarily terminated.

Besides the above-described gas-inlet control-valve degree-of-opening signal (extracted-gas valve degree-of-opening), the engine load (data) detected by an engine load detecting portion 25 (see FIG. 2) that detects the engine load of the marine diesel engine 1, the engine speed (data) detected by an engine-speed detecting portion 26 (see FIG. 2) that detects the engine speed of the marine diesel engine 1, and the scavenging pressure (data) detected by a scavenging-pressure detecting portion 27 (see FIG. 2) that detects the pressure of the scavenging air supplied from the supply manifold 8 to the engine body 2 are input to the engine control system 23 every predetermined period of time (periodically). The engine control system 23, according to the gas-inlet control-valve degree-of-opening signal, engine load, engine speed, and scavenging pressure input thereto, outputs the engine load detected by the engine load detecting portion 25 to the power-turbine control system 22, outputs a fuel-injection-timing command and/or an exhaust-valve-opening-timing command to the engine body 2, and outputs an (exhaust-gas) bypass-control-valve control command (valve degree-of-opening command) to the exhaust-gas bypass control valve V3.

The fuel-injection-timing command output from the engine control system 23 is input to the engine body 2, more specifically, to a fuel-injection valve (not shown) attached to the engine body 2, every predetermined period of time (periodically), and the fuel-injection timing of the engine body 2, more specifically, of the fuel-injection valve attached to the engine body 2, is automatically delayed according to the input fuel-injection-timing command.

Furthermore, the exhaust-valve-opening-timing command output from the engine control system 23 is input to the engine body 2, more specifically, to the exhaust valve (not shown) attached to the engine body 2, every predetermined period of time (periodically), and the exhaust-valve opening timing of the engine body 2, more specifically, of the exhaust valve attached to the engine body 2, is automatically advanced according to the input exhaust-valve-opening-timing command.

In addition, the bypass-control-valve control command output from the engine control system 23 is input to the exhaust-gas bypass control valve V3 every predetermined period of time (periodically), and the degree-of-opening of the exhaust-gas bypass control valve V3 is automatically adjusted according to the bypass-control-valve control command input thereto.

More specifically, when the inboard power demand increases, and the frequency of power supplied to the ship becomes smaller than the (first) predetermined value F1, the power management system 21 transmits a signal (command) to the power-turbine control system 22 to the effect that the inboard power demand is increasing (the inboard power supply is insufficient). Then, the power-turbine control system 22 transmits a gas-inlet control-valve degree-of-opening signal (extracted-gas valve degree-of-opening) to the engine control system 23, and a signal (command) is transmitted to the exhaust-gas bypass control valve V3 to decrease the degree-of-opening. When the degree-of-opening of the exhaust-gas bypass control valve V3 is decreased to increase the flow rate of the exhaust gas flowing into the power turbine 4, and the frequency of power supplied to the ship becomes larger than or equal to the (first) predetermined value F1 or the (second) predetermined value F2 that is larger than the predetermined value F1, the decreasing of the degree-of-opening of the exhaust-gas bypass control valve V3 is stopped, and the adjustment of the degree-of-opening of the exhaust-gas bypass control valve V3 is temporarily terminated.

In contrast, when the inboard power demand decreases, and the frequency of power supplied to the ship exceeds the (third) predetermined value F3 that is larger than the predetermined values F1 and F2, the power management system 21 transmits a signal (command) to the power-turbine control system 22 to the effect that the inboard power demand is decreasing (the inboard power supply is excessive). Then, the power-turbine control system 22 transmits a gas-inlet control-valve degree-of-opening signal (extracted-gas valve degree-of-opening) to the engine control system 23, and a signal (command) is transmitted to the exhaust-gas bypass control valve V3 to increase the degree-of-opening. When the degree-of-opening of the exhaust-gas bypass control valve V3 is increased to decrease the flow rate of the exhaust gas of the power turbine 4, and the frequency of power supplied to the ship becomes smaller than or equal to the (third) predetermined value F3 or the (fourth) predetermined value F4 that is smaller than the predetermined value F3 and larger than the predetermined value F2, the increasing of the degree-of-opening of the exhaust-gas bypass control valve V3 is stopped, and the adjustment of the degree-of-opening of the exhaust-gas bypass control valve V3 is temporarily terminated.

On the other hand, when the gas-inlet control valve V1 is (substantially) fully open and the exhaust-gas bypass control valve V3 is (substantially) fully closed, and moreover, the inboard power demand increases, the engine control system 23 transmits a fuel-injection-timing command and/or an exhaust-valve-opening-timing command to the engine body 2. Then, by delaying the fuel-injection timing or advancing the exhaust-valve opening timing, or by delaying the fuel-injection timing and advancing the exhaust-valve opening timing, the temperature of the exhaust gas to be fed to the power turbine 4 is increased, and the energy recovery rate in the power turbine 4 is increased, and when the frequency of power supplied to the ship becomes larger than or equal to the predetermined value F1 or the predetermined value F2 that is larger than the predetermined value F1, the adjustment of the fuel-injection timing and/or the exhaust-valve-opening timing is temporarily terminated.

When the inboard power demand decreases while the temperature of the exhaust gas to be fed to the power turbine 4 is increased by delaying the fuel-injection timing or advancing the exhaust-valve opening timing, or by delaying the fuel-injection timing and advancing the exhaust-valve opening timing, and the frequency of power supplied to the ship exceeds the predetermined value F3 that is larger than the predetermined values F1 and F2, the temperature of the exhaust gas to be fed to the power turbine 4 is decreased by advancing the fuel-injection timing or delaying the exhaust-valve opening timing, or by advancing the fuel-injection timing and delaying the exhaust-valve opening timing, the energy recovery rate in the power turbine 4 is increased, and when the frequency of power supplied to the ship becomes smaller than or equal to the predetermined value F3 or the predetermined value F4 that is smaller than the predetermined value F3 and larger than the predetermined value F2, the adjustment of the fuel-injection timing and/or the exhaust-valve-opening timing is temporarily terminated.

After that, when the inboard power demand becomes even smaller, eliminating the need to increase the temperature of the exhaust gas to be fed to the power turbine 4, more specifically, when the fuel-injection timing and/or the exhaust-valve-opening timing return to the regular (normal) timing, and the frequency of power supplied to the ship can be adjusted by changing the degree-of-opening of the gas-inlet control valve V1 and the exhaust-gas bypass control valve V3, the frequency of power supplied to the ship is adjusted by changing the degree-of-opening of the gas-inlet control valve V1 and the exhaust-gas bypass control valve V3.

Note that, when the fuel-injection timing is delayed to a predetermined value or the exhaust-valve opening timing is advanced to a predetermined value, and moreover, the inboard power demand increases, a diesel engine (auxiliary engine) (not shown) that rotationally drives a generator (not shown) different from the generator 11 is automatically or manually (by a crew) activated to meet the inboard power demand.

With the engine-exhaust-energy recovery device according to this embodiment, by delaying the fuel-injection timing or advancing the exhaust-valve opening timing, or by delaying the fuel-injection timing and advancing the exhaust-valve opening timing, the temperature of the exhaust gas to be fed to the power turbine 4 is increased, and the energy recovery rate in the power turbine 4 is increased. Accordingly, it is possible to meet the inboard power demand without activating a diesel engine (auxiliary engine) having fuel efficiency inferior to that of a marine diesel engine 1 and to reduce the total running cost.

### Second Embodiment

Referring to FIG. 3, an engine-exhaust-energy recovery device according to a second embodiment of the present invention will be described. FIG. 3 is a block diagram for describing, in more detail, the relevant part of the engine-exhaust-energy recovery device according to the second embodiment of the present invention.

The engine-exhaust-energy recovery device according to this embodiment differs from that according to the above-described first embodiment in that, as indicated by dashed lines in FIG. 3, the difference between the amount of power generated by the generator 11 (see FIG. 1), which is calculated by the power management system 21 or the power-turbine control system 22, and the amount of power currently needed in the ship is output as a deviation signal to the engine control system 23, and feedforward control is performed according to the deviation signal. Because the other components are the same as those according to the above-described first embodiment, descriptions of these components will be omitted.

Note that the same components as those in the first embodiment are denoted by the same reference numerals.

More specifically, in this embodiment, when it is assumed (expected) that the power supplied by the generator 11 becomes smaller than or larger than the inboard power demand, the gas-inlet control valve V1, the exhaust-gas bypass control valve V3, the fuel-injection valve, and the exhaust valve are operated in advance to minimize the difference between the amount of power generated by the generator 11 and the amount of power currently needed in the ship, before the power supplied by the generator 11 actually becomes smaller than or larger than the inboard power demand.

With the engine-exhaust-energy recovery device according to this embodiment, because the difference between the amount of power generated by the generator 11, which is calculated by the power management system 21 or the power-turbine control system 22, and the amount of power currently needed in the ship is output as a deviation signal to the engine control system 23, and feedforward control is performed according to the deviation signal, the difference between the amount of power generated by the generator 11 and the amount of power currently needed in the ship can be kept constantly small, and stable inboard power supply can be achieved.

Because the other advantages are the same as those of the above-described first embodiment, descriptions thereof will be omitted here.

### {Reference Signs List}

- 1:: marine diesel engine
- 2:: engine body
- 4:: power turbine
- 11:: generator
- 22:: power-turbine control system (control unit)
- 23:: engine control system (control unit)
- L2:: second exhaust pipe (exhaust pipe)
- V1:: gas-inlet control valve

## Claims

1. An engine-exhaust-energy recovery device comprising:
a power turbine (4) driven by exhaust gas guided from an engine body of a marine diesel engine (1);
a gas-inlet control valve (V1) provided at an intermediate point in an exhaust pipe (L2) that guides the exhaust gas from the engine body to the power turbine (4);
a generator (11) driven by the power turbine (4); and
a control unit (22, 23) that adjusts the degree-of-opening of the gas-inlet control valve (V1) according to the difference between the amount of power generated by the generator (11) and the amount of power needed in a ship,
**characterized in that**
when the degree-of-opening of the gas-inlet control valve (V1) reaches a predetermined threshold and the amount of power generated by the generator (11) is smaller than the amount of power needed in the ship, a control command to delay fuel-injection timing and/or a control command to advance exhaust-valve opening timing are output from the control unit (22, 23) to the engine body according to the difference between the amount of power generated by the generator (11) and the amount of power needed in the ship.

2. An engine-exhaust-energy recovery device according to claim 1,
wherein the difference between the amount of power generated by the generator (11) and the amount of power needed in the ship is output as a deviation signal to the control unit (22, 23), and
wherein the control unit (22, 23) performs feedforward control according to the deviation signal.

3. A ship comprising the engine-exhaust-energy recovery device according to claim 1 or claim 2.

4. A method of operating an engine-exhaust-energy recovery device including a power turbine (4) driven by exhaust gas guided from an engine body of a marine diesel engine (1), a gas-inlet control valve (V1) provided at an intermediate point in an exhaust pipe (L2) that guides the exhaust gas from the engine body to the power turbine (4), and a generator (11) driven by the power turbine (4),
**characterized in that**
the degree-of-opening of the gas-inlet control valve (V1) is adjusted according to the difference between the amount of power generated by the generator (11) and the amount of power needed in a ship, and
when the degree-of-opening of the gas-inlet control valve (V1) reaches a predetermined threshold and the amount of power generated by the generator (11) is smaller than the amount of power needed in the ship, the injection timing of a fuel-injection valve attached to the engine body is delayed and/or the timing of opening an exhaust valve attached to the engine body is advanced according to the difference between the amount of power generated by the generator (11) and the amount of power needed in the ship.

5. A method of operating an engine-exhaust-energy recovery device according to claim 4,
wherein the difference between the amount of power generated by the generator (11) and the amount of power needed in the ship is output as a deviation signal, and
wherein the feedforward control is performed according to the deviation signal.

## Patentansprüche

1. Motorabgas-Energierückgewinnungseinrichtung, umfassend:
eine Arbeitsturbine (4), die von Abgas angetrieben wird, das aus einem Motorkörper eines Marinedieselmotors (1) geführt wird;
ein Gaseinlass-Steuerventil (V1), das an einem dazwischenliegenden Punkt in einer Abgasleitung (L2) bereitgestellt ist, die das Abgas vom Motorkörper zur Arbeitsturbine (4) führt;
einen Generator (11), der von der Arbeitsturbine (4) angetrieben wird; und
eine Steuerungseinheit (22, 23), die den Öffnungsgrad des Gaseinlass-Steuerventils (V1) gemäß der Differenz zwischen der von dem Generator (11) erzeugten Energiemenge und der in einem Schiff benötigten Energiemenge einstellen,
**dadurch gekennzeichnet, dass**
wenn der Öffnungsgrad des Gaseinlass-Steuerventils (V1) einen vorbestimmten Schwellenwert erreicht und die von dem Generator (11) erzeugte Energiemenge kleiner ist als die im Schiff benötigte Energiemenge, ein Steuerungsbefehl zum Verzögern eines Einspritz-Timings und/oder ein Steuerungsbefehl zum Vorziehen eines Abgasventil-Öffnungs-Timings von der Steuerungseinheit (22, 23) an den Motorkörper gemäß der Differenz zwischen der von dem Generator (11) erzeugten Energiemenge und der im Schiff benötigten Energiemenge ausgegeben wird.

2. Motorabgas-Energierückgewinnungseinrichtung nach Anspruch 1,
wobei die Differenz zwischen der von dem Generator (11) erzeugten Energiemenge und der im Schiff benötigten Energiemenge als ein Abweichungssignal an die Steuerungseinheit (22, 23) ausgegeben wird, und
wobei die Steuerungseinheit (22, 23) eine Feedforward-Steuerung gemäß dem Abweichungssignal durchführt.

3. Schiff, das die Motorabgas-Energierückgewinnungseinrichtung nach Anspruch 1 oder Anspruch 2 umfasst.

4. Verfahren zum Betreiben einer Motorabgas-Energierückgewinnungseinrichtung, die eine Arbeitsturbine (4), die von Abgas angetrieben wird, das aus einem Motorkörper eines Marinedieselmotors (1) geführt wird, ein Gaseinlass-Steuerventil (V1), das an einem dazwischenliegenden Punkt in einer Abgasleitung (L2) bereitgestellt ist, die das Abgas vom Motorkörper zur Arbeitsturbine (4) führt, und einen Generator (11), der von der Arbeitsturbine (4) angetrieben wird, aufweist,
**dadurch gekennzeichnet, dass**
der Öffnungsgrad des Gaseinlass-Steuerventils (V1) gemäß der Differenz zwischen der von dem Generator (11) erzeugten Energiemenge und der in einem Schiff benötigten Energiemenge eingestellt wird, und
wenn der Öffnungsgrad des Gaseinlass-Steuerventils (V1) einen vorbestimmten Schwellenwert erreicht und die von dem Generator (11) erzeugte Energiemenge kleiner ist als die im Schiff benötigte Energiemenge, das Einspritz-Timing eines Einspritzventils, das an dem Motorkörper angebracht ist, verzögert wird und/oder das Timing des Öffnens eines Abgasventils, das an dem Motorkörper angebracht ist, vorgezogen wird, gemäß der Differenz zwischen der von dem Generator (11) erzeugten Energiemenge und der im Schiff benötigten Energiemenge.

5. Verfahren zum Betreiben einer Motorabgas-Energierückgewinnungseinrichtung nach Anspruch 4,
wobei die Differenz zwischen der von dem Generator (11) erzeugten Energiemenge und der im Schiff benötigten Energiemenge als ein Abweichungssignal ausgegeben wird, und
wobei die Feedforward-Steuerung gemäß dem Abweichungssignal durchgeführt wird.

## Revendications

1. Dispositif de récupération d'énergie d'échappement de moteur comprenant :
une turbine de puissance (4) entraînée par des gaz d'échappement guidés depuis un corps de moteur d'un moteur diesel marin (1) ;
une vanne de commande d'admission de gaz (V1) prévue au niveau d'un point intermédiaire dans un pot d'échappement (L2) qui guide les gaz d'échappement depuis le corps de moteur jusqu'à la turbine de puissance (4) ;
un générateur (11) entraîné par la turbine de puissance (4) ; et
une unité de commande (22, 23) qui ajuste le degré d'ouverture de la vanne de commande d'admission de gaz (V1) selon la différence entre la quantité de puissance produite par le générateur (11) et la quantité de puissance nécessaire dans un bateau,
**caractérisé en ce que**
lorsque le degré d'ouverture de la vanne de commande d'admission de gaz (V1) atteint un seuil prédéterminé et que la quantité de puissance produite par le générateur (11) est plus petite que la quantité de puissance nécessaire dans le bateau, un ordre de commande pour retarder la synchronisation d'injection de carburant et/ou un ordre de commande pour avancer la synchronisation d'ouverture de vanne d'échappement sont délivrés en sortie depuis l'unité de commande (22, 23) vers le corps de moteur selon la différence entre la quantité de puissance produite par le générateur (11) et la quantité de puissance nécessaire dans le bateau.

2. Dispositif de récupération d'énergie d'échappement de moteur selon la revendication 1,
dans lequel la différence entre la quantité de puissance produite par le générateur (11) et la quantité de puissance nécessaire dans le bateau est délivrée en sortie en tant que signal d'écart vers l'unité de commande (22, 23), et
dans lequel l'unité de commande (22, 23) effectue une commande prédictive selon le signal d'écart.

3. Bateau comprenant le dispositif de récupération d'échappement de moteur selon la revendication 1 ou la revendication 2.

4. Procédé de mise en oeuvre d'un dispositif de récupération d'échappement de moteur incluant une turbine de puissance (4) entraînée par des gaz d'échappement guidés depuis un corps de moteur d'un moteur diesel marin (1), une vanne de commande d'admission de gaz (V1) prévue au niveau d'un point intermédiaire dans un pot d'échappement (L2) qui guide les gaz d'échappement depuis le corps de moteur vers la turbine de puissance (4), et un générateur (11) entraîné par la turbine de puissance (4),
**caractérisé en ce que**
le degré d'ouverture de la vanne de commande d'admission de gaz (V1) est ajusté selon la différence entre la quantité de puissance produite par le générateur (11) et la quantité de puissance nécessaire dans un bateau, et
lorsque le degré d'ouverture de la vanne de commande d'admission de gaz (V1) atteint un seuil prédéterminé et que la quantité de puissance produite par le générateur (11) est plus petite que la quantité de puissance nécessaire dans le bateau, la synchronisation d'injection d'une vanne d'injection de carburant attachée au corps de moteur est retardée et/ou la synchronisation d'ouverture d'une vanne d'échappement attachée au corps de moteur est avancée selon la différence entre la quantité de puissance produite par le générateur (11) et la quantité de puissance nécessaire dans le bateau.

5. Procédé de mise en oeuvre d'un dispositif de récupération d'échappement de moteur selon la revendication 4,
dans lequel la différence entre la quantité de puissance produite par le générateur (11) et la quantité de puissance nécessaire dans le bateau est délivrée en sortie en tant que signal d'écart, et
dans lequel la commande prédictive est effectuée selon le signal d'écart.
